# EUROPEAN PATENT APPLICATION

(11) **EP 0 848 544 A1**
(43) Date of publication of application: **17.06.1998**
(21) Application number: 97309741.3
(22) Date of filing: 03.12.1997
(51) Int. Cl.: H04N 1/401

(54) **Shading correction method of image reading means and image processing apparatus for processing read image**

(30) Priority: 16.12.1996 JP 335891/96
(71) Applicant: ALPS ELECTRIC CO., LTD., Ota-ku Tokyo 145 (JP)
(72) Inventor: Takeuchi, Minoru, Iwate-gun, Iwate-ken (JP); Hirano, Mitsuo, Morioka-shi, Iwate-ken (JP)
(74) Representative: Kensett, John Hinton

(57) **Abstract**

In a shading correction method of image reading means and an image processing apparatus, correction values for making the output values of respective reading devices proportional to the magnitude of the lightness are set to the respective reading devices and output values are created by correcting the respective portions of the image information read by the respective reading devices based on the correction values. With this arrangement, a more accurate recording image of high quality can be obtained by making the magnitudes of lightness (intensity of incoming light) proportional to the output values of respective reading devices and preventing the occurrence of the error of the output values among the respective reading devices.

## Description

The present invention relates to a shading correction method of image reading means and an image processing apparatus for processing a read image, and more specifically, to a shading correction method of image reading means and an image processing apparatus for processing a read image which are suitable when an intermediate color is read by using an image reading unit (image scanner) having a plurality of reading devices disposed regularly.

Image reading means, known as scanners, are generally used as peripheral devices for computers and used in reading devices on which the image reading means is mounted, the image reading means being arranged such that light is irradiated to a document from light sources, the light reflected from the document is read by a plurality of reading devices such as CCDs etc. disposed in a regular array and the respective portions of the image information of the document are converted into electric signals and output.

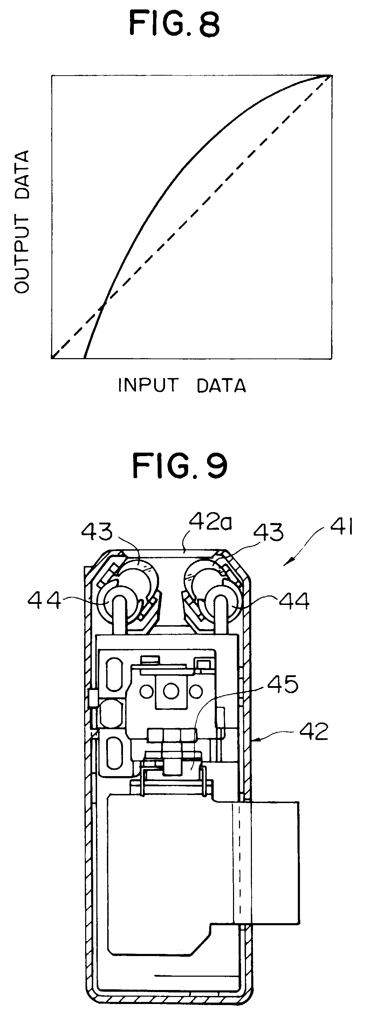

Figure 9 is a view showing the main portion of an image scanner 41 generally used as conventional image reading means. The image scanner 41 has a case member 42 formed to an approximately rectangular prism shape. The case member 42 has an opening 42a defined to a side thereof which-confronts a not shown document 18 located above it. In FIG. 9, light sources 44 are disposed in the case member 42 at both the upper right and left ends thereof in the vicinity of the opening 42a to irradiate light to the document 18 through a lens 43. Further, a sensor unit 45 is disposed at approximately the center of the case member 42 to convert the respective portions of the image information of the document into electric signals in response to the light reflected from the document 18 and output the electric signals. When resolution (number of dots/inch) is set to, for example, 120 pieces in the reading of the document 18 in correspondence to the number of pixels (dots) to be read, the sensor unit 45 is provided with 120 pieces/inch of CCDs (not shown) which are regularly disposed in the vertical direction with respect to the surface the paper in FIG. 9.

Since the respective CCDs disposed to the sensor unit 45 of the image scanner 41 do not have the same sensibility, even if the same white color, for example, is read by them, the values output therefrom are made to 50, 70, etc. and accordingly, there is a problem that the same color is made while or black depending upon dots.

Further, the light reflected from the document 18 which is to be read by the respective CCDs is made bright at the center of the CCDs in the direction in which the CCDs are disposed and dark on both the sides in the direction because the light irradiated from the light sources 44 does not uniformly illuminates the document 18. Thus, the CCDs have such characteristics that the outputs from the CCDs located at both the ends in their disposed direction are low and the outputs from the CCDs located at the center in their disposed direction are high. Accordingly, there is also caused by the characteristics a problem that even if the same color is read, the values output from the respective CCDs are different depending upon where the CCDs are disposed and even the same color is made white or black depending upon the positions where they are disposed.

The problem called the uneven output of the scanner is also caused by the uneven lightness of the light sources 44, the accuracy of the lens 43, the uneven positional accuracy between a document and the CCDs (the distances between the document and the CCDs).

To cope with the problem of the uneven output of the scanner, there is generally provided a white reference board (not shown), the brightness and color (reference information) of the white reference board are previously read before the image information of the document 18 is read by the image scanner 41 and correction reference data is determined so that the data (output values) read by the respective CCDs based on the reference information of the white reference board is made to the maximum value of the outputs from the CCDs. Then, shading correction is carried out so that the output values which are different to the respective CCDs regardless of that they read the same color are corrected to the same output values to the respective CCDs.

However, the aforesaid conventional shading correction has a problem that when an intermediate color which is located between a white color having the largest magnitude of lightness (having the strongest light) and a black color having the smallest magnitude of lightness (having the weakest light) is read, the respective CCDs have a different output value.

That is, in the conventional shading correction, since the respective CCDs have the same output values when they read the white color, any error as to the white color can be eliminated between the respective CCDs. Further, when the CCDs read the block color having the smallest magnitude of lightness, no error is caused to the output values of the respective CCDs because the lightness of the black color is zero.

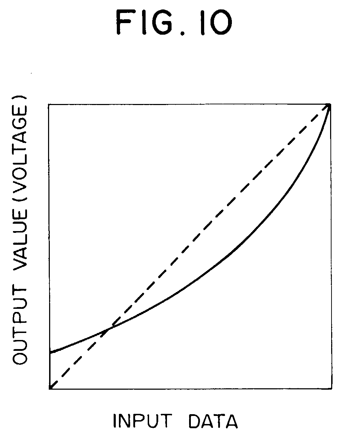

However, when the so-called intermediate color which is located between the minimum magnitude of lightness (black color) and the maximum magnitude of lightness (white color) is read by the CCDs, the respective CCDs outputs a aifferent value. That is, as shown in FIG. 10, the output value of the respective CCDs is not linearly proportional to the change of the magnitude of the lightness (intensity of incoming light) and the respective CCDs have a relationship inherent to them. As a result, even if the CCDs read the same intermediate color, they output a different value and there is caused a difference in density. A reason why such an error is caused resides in the characteristics of the sensibility and so on of the respective CCDs and the difference of the intensity of the reflected light based on the positions where the CCDs are disposed.

An object of the present invention is to provide a shading correction method of image reading means and an image processing apparatus for processing a read image capable of obtaining more accurate recording image information of high quality by establishing a proportional relationship between the magnitudes of lightness (intensities of incoming light) and the output values of respective reading devices and preventing the occurrence of the error of the output values among the respective reading devices even if an intermediate color is read by overcoming the problems in the aforesaid conventional image processing apparatuses for processing a read image.

The present invention provides a shading correction method of image reading means which sets correction values for the respective reading devices so that the proportional relationship of the output values of the respective reading devices is established to the magnitudes of lightness and creates the output values of the respective reading devices by correcting the respective portions of image information read by the respective reading devices based on the correction values.

The present invention may carry out shading correction by promptly and properly reading the correction values of the respective reading devices by a shading correction method of image reading means which is arranged such that the correction values for the respective portions of image information are read out by checking the respective portions of the image information to be read with the correction tables of the respective reading devices.

The present invention may properly correct the respective portions of the image information read by the respective reading devices by calculating the correction values to the respective portions of the image information to be read by substituting the respective portions of the image information for the correction formulas of the respective reading devices and to prevent the occurrence of the error of the outputs among the respective reading devices even if an intermediate color is read by establishing the proportional relationship of the output values of the respective reading devices to the magnitudes of lightness.

Embodiments of the present invention may obtain more accurate recording image information of high quality by establishing the proportional relationship of the output values of the respective reading devices to the magnitudes of lightness and preventing the occurrence of the error of the output values among the respective reading devices even if an intermediate color is read by providing the image processing apparatus for processing a read image with a correction value storing unit for storing correction values for making the output values of the respective reading devices proportional to the magnitudes of lightness and a correction processing unit for subjecting the output values to shading correction by checking the respective portion of the image information read by the respective reading devices with the predetermined correction values in the correction value storing unit.

Embodiments of the present invention will now be described,by way of example only, with reference to the accompanying drawings,in which:
FIG. 1 is a plan view showing the main portion of an embodiment of a recording apparatus to which a shading correction method of image reading means according to the present invention and an image processing apparatus according to the present invention are applied;
FIG. 2 is a left side elevational view of the recording apparatus shown in FIG. 1;
FIG. 3 is a plan view showing the arrangement of the main portion of a carriage unit of the recording apparatus shown in FIG. 1;
FIG. 4 is a plan view showing the arrangement of the main portion in an image scanner of the recording apparatus shown in FIG. 1;
FIG. 5 is a view describing how light sources of the image scanner in FIG. 4 are disposed;
FIG. 6 is a side perspective view of the main portion of the recording apparatus shown in FIG. 1;
FIG. 7 is a block diagram showing the arrangement of the main portion of control means of the recording apparatus shown in FIG. 1;
FIG. 8 is a view describing an example of a correction table of a correction value storing unit in FIG. 7;
FIG. 9 is a plan view showing the arrangement of the main portion in a conventional image scanner; and
FIG. 10 is a view describing the relationship between the magnitude of lightness (intensity of incoming light) and the output value (voltage) of image information read by a reading device in the conventional image scanner.

An embodiment of the present invention will be described with reference to the drawings.

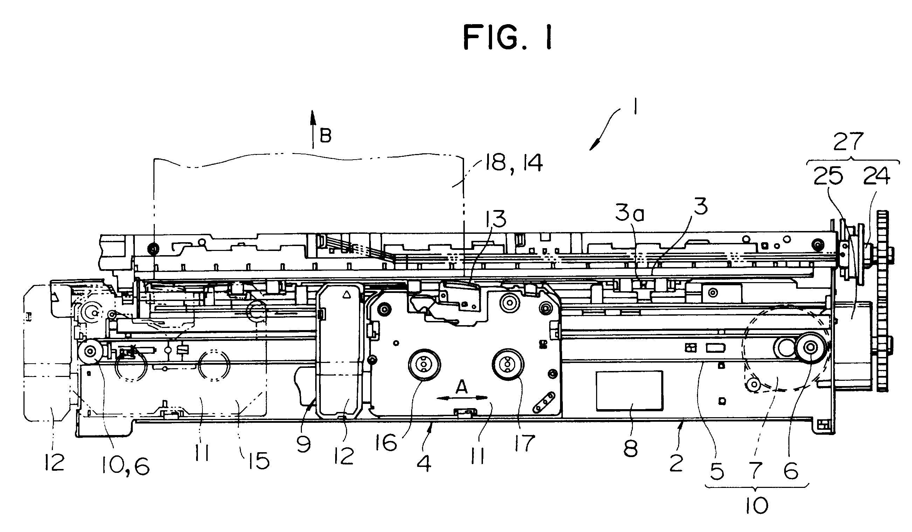

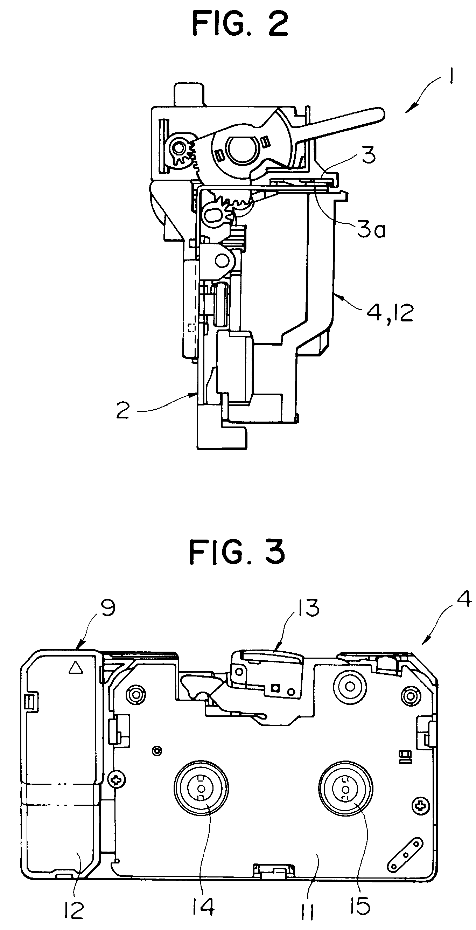

As shown in FIG. 1 and FIG. 2, a recording apparatus 1, to which a shading correction method of image reading means according to the present invention and an image processing apparatus for processing a read image according to the present invention are applied, includes a frame 2 disposed in a main body (not shown) and formed to an approximately rectangular flat shape. A flat-sheet shaped platen 3 is disposed to the frame 2 so as to extend in a right to left direction with its recording surface 3a facing in an approximately vertical direction in FIG. 1. A carriage unit 4 is disposed forwardly of the platen 3 (on a lower side in FIG. 1) so that it can reciprocatingly move along the platen 3.

As shown in FIG. 1, a drive belt 5 is disposed to the lower side of the carriage unit 4 and the carriage unit 4 is secured to a position of the drive belt 5. The drive belt 5 is trained around a pair of right and left pulleys 6, 6 disposed in the vicinity of both the right and left ends of the frame 2 in FIG. 1. One of the pulleys 6 shown on the right side in FIG. 1 can be rotated by the drive force of a carriage motor 7 composed of a step motor or the like as drive means shown by a broken line on the right side of the pulley 6. The carriage motor 7 is electrically connected to control means 8 to be described later which is disposed at a desired position of the frame 2 and driven in response to a control signal sent from the control means 8.

That is, the carriage motor 7 which is driven in response to the control signal sent from the control means 8 permits carriage unit 4 to reciprocatingly move along the platen 3 as shown by a two-directional arrow A in FIG. 1.

Drive means 10 is composed of the drive belt 5, the pulleys 6, 6 and the carriage motor 7 to reciprocatingly move the carriage unit 4 in the main scanning direction which is perpendicular to the sub-scanning direction of an image scanner (color image scanner in the embodiment) 9 as image reading means which will be described later.

As shown in FIG. 1 and FIG. 3, the carriage unit 4 includes a carriage portion 11 located on a right side and a scanner mounting portion 12 located on a left side.

The carriage portion 11 has a thermal head 13 as recording means disposed thereto in confrontation with the recording surface 3a of the platen 3. Thermal head 13 includes a plurality of heating devices (not shown) which are regularly disposed so as to be selectively heated based on recording data in response to a control command from the control means 8 which will be described later and is arranged so as to be caused by a not shown head drive mechanism to come into contact with the recording surface 3a of the platen 3 through a paper sheet 14. The position where thermal head 13 is in contact with the platen 3 in the head down state in which thermal head 13 comes into contact with the recording surface 3a of the platen 3 is a recording position.

As shown by an imaginary line on the left side of FIG. 1, a ribbon cassette 15, which accommodates a multicolor ink ribbon (not shown) and guides it forwardly of thermal head 13, can be mounted on the upper surface of the carriage portion 11. A winding bobbin 16 and a feed bobbin 17 are disposed to the carriage portion 11 with the extreme ends thereof projecting from the upper surface of the carriage portion 11. The winding bobbin 16 and the feed bobbin 17 constitute a portion of a well-known ribbon traveling mechanism (not shown) and the multicolor ink ribbon accommodated in the ribbon cassette 15 which is mounted on the upper surface of the carriage portion 11 is traveled by driving the ribbon traveling mechanism.

The thermal head 13, the head drive mechanism, the ribbon traveling mechanism and the like are electrically connected to the control means 8 which will be described later and driven in response to a control command sent from the control means 8.

Note, thermal head 13 and the head drive mechanism can be driven when the image information read from a document 18 is directly recorded on the paper sheet 14 such as a post card and so on and the multicolor ink ribbon and the ribbon traveling mechanism can be also driven at the time of recording.

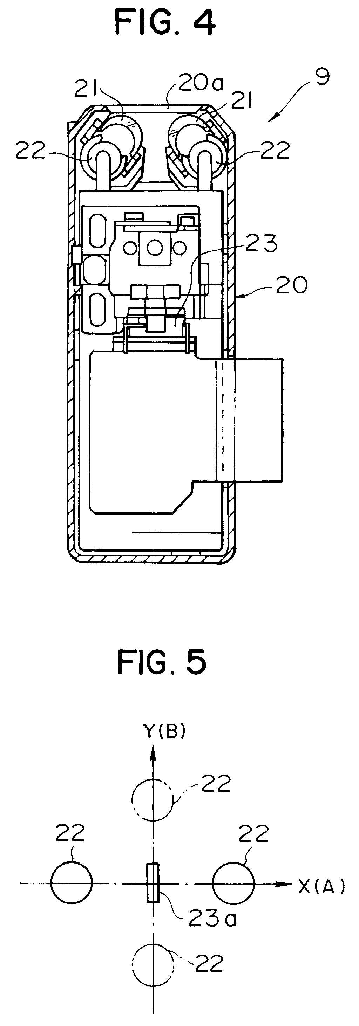

The image scanner 9 as the image reading means is disposed on the supper surface of the scanner mounting portion 12. As shown in FIG. 4, the image scanner 9 includes an approximately rectangular-prism-shaped case 20 having an opening 20a formed to the surface thereof confronting the platen 3. Two light sources 22 are disposed in the case 20 in the vicinity of the opening 20a of the case 20 (at both the upper right and left ends in FIG. 4) in such a manner that they confront each other in the main scanning direction of the image scanner 9 which is the moving direction of the carriage unit 4 so as to irradiate light toward the document 18 such as a post card, a photograph and so on held in front of the platen 3 through a lens 21 when an image is read. Further, a sensor unit 23 is disposed approximately at the center of the case 20 to convert the image information of the document 18 into an electric signal in response to the light reflected from the document 18 and output the electric signal to the control means 8. When resolution (number of dots/inch) is set to, for example, 120 pieces in the reading of the document 18 in correspondence to the number of pixels (dots) to be read, the sensor unit 23 is provided with 120 pieces/inch of CCDs (not shown) which are regularly disposed in the vertical direction with respect to the surface the paper in FIG. 4. The image scanner 9 is electrically connected to the control means 8 to be described later.

That is, as shown in FIG. 5, when it is assumed in the image scanner 9 of the embodiment that the main scanning direction of the image scanner 9 is represented by an X-axis, the sub-scanning direction which is perpendicular to the main scanning direction of the image scanner 9 is represented by a Y-axis and the intersect point of the X-axis and the Y-axis is the position of the reading portion 23a of the sensor unit 23, the two light sources 22 are disposed symmetrically with respect to the intersect point on the X-axis as shown by solid lines in FIG. 5.

Note, the two light source 22 may be disposed symmetrically with respect to the intersect point on the Y-axis as shown by broken lines in FIG. 5 or the four light sources 22 in total may be disposed as shown by the solid lines and the broken lines in FIG. 5 to irradiate light to the surface of the document 18 from more directions. Further, the light sources 22 may not be disposed at positions on the X-axis and the Y-axis. That is, the number of the light sources 22 and the positions where they are disposed are not particularly limited to those disclosed in the embodiment so long as a plurality of the light sources 22 are disposed centered on the intersect point and it suffices only to determine the number and positions of the light sources 22 based on a design concept and so on.

The scanner mounting portion 12 can be reciprocatingly moved along the platen 3 by the drive force of the carriage motor 7 together with the carriage portion 11 when the image is read and the moving direction of the carriage unit 4 shown by a two-directional arrow A in FIG. 1 is the main scanning direction of the image scanner 9.

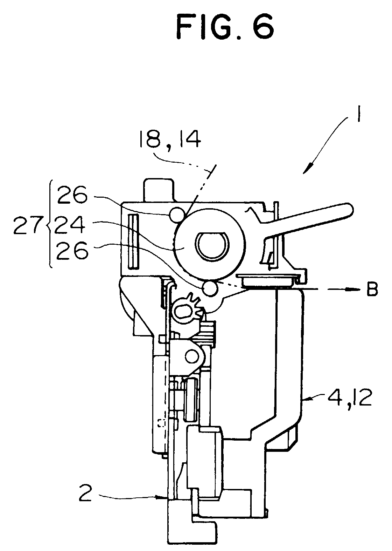

As shown in FIG. 6, a paper feed roller 24 is disposed below the platen 3 to feed the document 18 at a predetermined speed when the image information thereof is read and the paper sheet 14 when the image information is recorded so that they pass through forward of the recording surface 3a of the platen 3 as shown by an arrow B in FIG. 6. As shown in FIG. 1, the paper feed roller 24 can be rotated by the drive force of a paper feed motor 25 composed of a step motor or the like disposed outwardly of the frame 2 on the right side thereof.

As shown in FIG. 6, auxiliary rollers 26 are rotatably disposed obliquely downward of the paper feed roller 24 on the right and left sides thereof so that they are caused to come into contact with the paper feed roller 24 under a desired contact pressure and rotated by the rotation of the paper feed roller 24. That is, the document 18 or the paper sheet 14 can be caused to travel while being clamped between the paper feed roller 24 and the auxiliary rollers 26. Further, a guide (not shown) is disposed at a suitable position around the paper feed roller 24 to guide the document 18 or the paper sheet 14 so that it travels along a predetermined feed path.

The paper feed motor 25 is electrically connected to the control means 8 to be described later which is disposed to the desired position of the frame 2 and driven in response to a control command sent from the control means 8.

That is, as shown by the arrow B in FIG. 1 and FIG. 6, when the paper feed motor 25 is driven in response to the control command sent from the control means 8, the document 18 or the paper sheet 14 is fed in the direction perpendicular to the moving direction of the carriage unit 4 shown by the two-directional arrow A in FIG. 1, so that the traveling direction of the document 18 or the paper sheet 14 shown by the arrow B in FIG. 1 and FIG. 6 is the sub-scanning direction of the image scanner 9.

Feed means 27 for causing the document 18 or the paper sheet 14 to travel in the sub-scanning direction is composed of the paper feed roller 24 and the paper feed motor 25 and the auxiliary rollers 26.

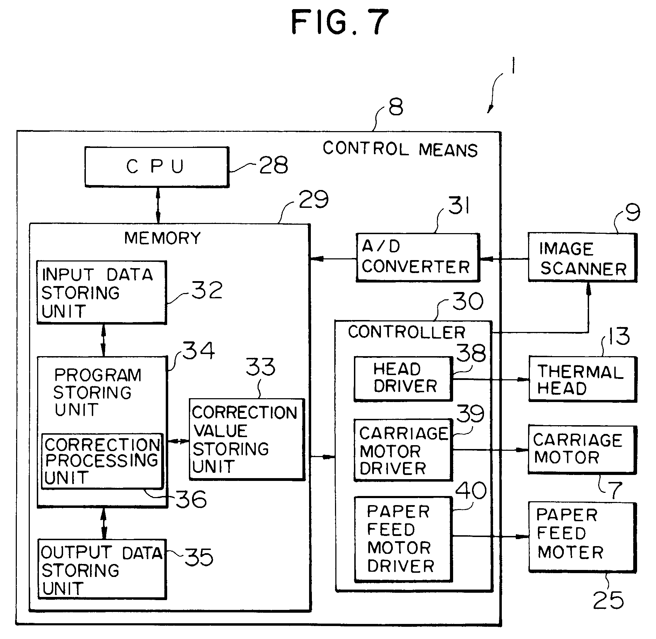

Returning to FIG. 1, the control means 8 for controlling the operation of the respective units of the recording apparatus 1 is disposed to the desired position of the frame 2. As shown in FIG. 7, the control means 8 includes at least a CPU 28, a memory 29 formed of a ROM, RAM, etc. each having a suitable capacity and a controller 30 for driving the respective units of the recording apparatus 1.

The memory 29 includes at least an input data storing unit 32 in which stored are various types of input data such as image data which is output from the image scanner 9 and converted into a digital electric signal by an A/D converter 31, the lightness showing a degree of density of the image data, etc.; a correction value storing unit 33 in which stored are correction formulas or correction tables for executing correction so that output values (output voltages) are proportional to the intensities of light (the magnitudes of lightness) read by the respective CCDs of the sensor unit 23; a program storing unit 34 in which various programs are stored; and an output data storing unit 35 in which stored are various kinds of output data such as recording data for recording, a control command for inputting image data, a control command for executing recording, etc.

Specifically, stored in the correction value storing unit 33 are the correction tables or the correction formulas to which correction values are set to establish a relationship shown in FIG. 8, that is, to make the output data (the output values) proportional to the input data relating to the magnitudes of lightness. The relationship between input data and output data shown in FIG. 8 is a correction value which corresponds to the case that a certain CCD has sensor characteristics as shown in FIG. 10 and previously checked and set to each of the CCDs. The correction of the input data executed using the correction value provides a proportional relationship between the magnitude of lightness relating to an intermediate color and the output value, by which the error of the magnitude of lightness among the respective CCDs can be eliminated.

The program storing unit 34 is provided with a correction processing unit 36 in which stored is at least a program for executing arithmetic operation for converting the respective portions of the image information of the document 18 read by the respective CCDs into the output values (output data) which have been subjected to shading correction based on the correction tables or the correction formulas of the CCDs in the correction value storing unit 33. Further stored in the correction processing unit 36 of the program storing unit 34 are a program for decomposing the image data (output data) to the three color data of the three primary colors composed of Y (yellow: yellow), C (cyan: green-blue) and M (magenta: purplish red) and forming three kinds of color image data of Y color image data, C color image data and M color image data; a program for forming recording data for the respective colors for executing recording based on the color image data of the respective colors; a program for detecting the presence or absence of the document 18 or the paper sheet 14 and the extreme edge position of the document 18 or the paper sheet 14 traveling in the sub-scanning direction from the input data (all the scanned data) which is output from the image scanner 9; a program for detecting both the side edge positions of the document 18 or the paper sheet 14 located in the main scanning direction from the input data which is output from the image scanner 9; a program for detecting the reference position of the carriage unit 4; a program for outputting the recording data of the respective colors to the output data storing unit 35 in a predetermined order of the colors in a line unit (unit of a recorded line) in recording; recording a program for controlling the operation of the respective units when the image information read from the document 18 is directly recorded to the paper sheet 14 such as the post card and so on, etc. Then, the CPU 28 forms the recording data of the respective colors based on a program stored to the correction processing unit 36 of the program storing unit 34 and the recording data of the respective colors is stored to the output data storing unit 35.

An image processing apparatus 37 of the embodiment is composed of the input data storing unit 32, the correction value storing unit 33 and the correction processing unit 36.

Note, although the image processing unit 37 is disposed in the control means 8 of the recording apparatus 1 in the embodiment, the image processing unit 37 may be disposed in the image scanner 9 and the location thereof is not particularly limited to the arrangement of the embodiment.

The controller 30 is provided with at least a head drive driver 38 used to drive the thermal head 13 for energizing the heating elements (not shown) of thermal head 13, a carriage motor driver 39 used to drive the carriage motor 7 constituting a portion of the drive means 10 and a paper feed motor driver 40 used to drive the paper feed motor 25 constituting a portion of the feed means 27 and further a head contact/separation drive driver (not shown) used to drive a head drive mechanism (not shown) for causing the thermal head 13 to come into contact with and separate from the platen 3, a ribbon drive driver (not shown) used to drive an ink ribbon traveling mechanism (not shown), etc.

The CPU 28 detects the presence or absence of the document 18 or the paper sheet 14, the extreme edge positions and side edges thereof and the reference position of the carriage unit 4 from the input data which is output from the image scanner 9 based on the various programs stored in the program storing unit 34 and stores the detected data to the output data storing unit 35.

Note, the control means 8 may be arranged such that the respective portions thereof are, for example, divided into a plurality of units provided independently and it is not particularly limited to the arrangement of the embodiment.

Further, in the recording apparatus 1 of the embodiment, various types of external signals can be input to the control means 8 and they can be controlled by the control means 8 so that the recording apparatus 1 can be used as an ordinary printer for recording an image formed by a not shown word processor, computer, etc. to the paper sheet 14 when the recording apparatus 1 is connected thereto.

Next, operation of the embodiment arranged as described above will be described.

The recording apparatus 1 of the embodiment starts to read the image information of the document 18 when the extreme edge of the document 18 is set by being clamped between the paper feed roller 24 and the auxiliary roller 26 located obliquely downward on the left side of the paper feed roller 24 in FIG. 6 by the operator or the like. When the document 18 is set, the control means 8 sends the control command to the image scanner 9, the carriage motor 7 and the paper feed motor 25 based on the program prestored to the memory 29 so that the respective light sources 22 of the image scanner 9 are turned on and the image scanner 9 is put into an operating state. At the same time, the carriage unit 4 starts to travel in the main scanning direction of the image scanner 9 along the platen 3 toward a home position HP shown on the left side in FIG. 1 and the document 18 starts to travel in the sub-scanning direction of the image scanner 9. Note, when the carriage unit 4 is previously located at the home position HP, it travels rightward once and then returns to the home position HP. Further, the respective light source 22 are also turned on when the image is recorded -n addition to the time at which the image is read to thereby put the image scanner 9 into the operating state.

All the information located in front of the image scanner 9 is read thereby while the image scanner 9 is traveling in the main scanning direction toward the home position HP as well as the document 18 is cued up to start to read the image information of the document 18.

At the time, as shown in Fig. 7, the input data read by the image scanner 9 (all the scanned data) is converted into the digital electric data by the A/D converter 31 and stored to the input data storing unit 32 of the memory 29.

Then, the CPU 28 detects the presence or absence of the document 18, the extreme edge position of the document 18, the side edge positions of the document 18 and the reference position of the carriage unit 4 from the input data based on the program stored in the program storing unit 34, the control means 8 sends the control command to the carriage motor 7 and the paper feed motor 25 based on the result of detection to thereby securely locate the carriage unit 4 at the home position HP as well as accurately cue up the document 18.

Next, when the image information of the document 18 starts to be read, the carriage motor 7 is driven in response to the control command from the control means 8, the carriage unit 4 is moved rightward in FIG. 1 and the image information of one line of the document 18 is read by the color image scanner 9 for the respective CCDs of the sensor unit 23. On the completion of the reading of the image information of the one line of the document 18, the paper feed motor 25 is driven in response to the control command of the control means 8 to thereby cause the document 18 to travel by the one line in the sub-scanning direction perpendicular to the main scanning direction of the image scanner 9.

Thereafter, the travel of the image scanner 9 by one line in the main scanning direction and the travel of the document 18 by the one line of the image scanner 9 in the sub-scanning direction perpendicular to the main scanning direction are repeated likewise so that all the image information of the document 18 is read in a line unit, converted into the digital electric signal by the A/D converter 31 and successively stored to the input data storing unit 32 of the memory 29.

Then, the image information of the document 18 read by the color image scanner 9 in the line unit is made by the CPU 28 to the output values (output data) which have been subjected to the shading correction executed based on the correction tables or the correction formulas in the correction value storing unit 33 which correspond to the magnitudes of lightness of the image information in accordance with the program stored in the correction processing unit 36. Thereafter, the output values are subjected to various kinds of data processing and successively stored to the output data storing unit as recording information.

To summarize the image data processing executed to the document 18 by the recording apparatus 1 of the present invention, the correction tables or the correction formulas, which establish the proportional relationship between the output values and the magnitudes of lightness (intensities of incoming light) of the respective colors, are previously prepared to the respective CCDs and stored to the correction value storing unit 33. The respective portions of the image information of the document 18 read by the CPU 28 through the image scanner 9 are subjected to the shading correction using the correction tables or the correction formulas which are inherent the respective CCDs so as to obtain desired corrected output values (output data). Thereafter, the data processing is completed by subjecting the resulting output values to the various kind of processing (edit processing to obtain desired outputs).

Therefore, according to the embodiment, since the magnitudes of lightness (intensities of incoming light) are proportional to the output values of the respective CCDs, no error of the output values is caused among the respective CCDs even in an intermediate color and accordingly a more accurate recording image of high quality can be obtained.

The present invention is not limited to the above embodiment but it may be modified when necessary.

As described above, according to the shading correction method of the image reading means and the image processing apparatus of the present invention, since the magnitudes of lightness (intensities of incoming light) are proportional to the output values the respective reading devices, there can be obtained the advantage that the occurrence of the error of the output values can be prevented among the respective reading devices even in an intermediate color and a more accurate recording image of high quality can be obtained.

## Claims

1. A shading correction method in image reading means having a plurality of reading devices disposed regularly, comprising the steps of:
setting correction values to the respective reading devices so that the output values of the respective reading devices are proportional to the magnitudes of lightness of the respective portions of an image to be read; and
calculating the output values by correcting the respective portions of the image information read by said respective reading devices based on the correction values.

2. A shading correction method in image reading means according to claim 1, wherein the correction values are read out by checking the respective portions of the image information with the correction tables of the respective reading devices.

3. A shading correction method in image reading means according to Claim 1 or 2,wherein the correction values are calculated by substituting the respective portions of the image information for the correction formulas of the respective reading devices.

4. An image processing apparatus for processing a read image, comprising:
a correction value storing unit for storing correction values which make the output values of a plurality of reading devices regularly disposed to image processing means proportional to the magnitudes of lightness of the respective portions of the image read by the respective reading devices; and
a correction processing unit for correcting the output values so as to be subjected to shading correction by checking the respective portions of the image information read by the respective reading devices with the predetermined correction values in said correction value storing unit,
whereby the respective portions of the image information of a document read by the image reading means in said correction output unit are output as the corrected output values.
